# EUROPEAN PATENT APPLICATION

(11) **EP 2 679 777 A1**
(43) Date of publication of application: **01.01.2014**
(21) Application number: 12004855.8
(22) Date of filing: 28.06.2012
(51) Int. Cl.: F01D 11/12, F04D 29/52, F04D 29/02, B23P 6/00

(54) **Compressor for a gas turbine and method for repairing and/or changing the geometry of and/or servicing said compressor**

(71) Applicant: Alstom Technology Ltd, 5400 Baden (CH)
(72) Inventor: Steffen, Tobias, 8954 Geroldswil (CH); Rauch, Marc, 8105 Regensdorf (CH); Corradi, Mauro, 5430 Wettingen (CH); Veith, Björn, 8105 Regensdorf (CH)

(57) **Abstract**

A Compressor (10), especially for a gas turbine, comprises a rotor (15) rotating about an axis (17) and a housing (11) coaxially surrounding said rotor (15), thereby defining a flow channel (14) between rotor (15) and housing (11) for a fluid to be compressed, whereby alternating rows of vanes (13) and blades (16) are arranged within the flow channel (14), the vanes (13) being mounted in the inner wall of the housing (11), and the blades (16) being mounted in the outer wall of the rotor (15).

A fast exchangeability and/or repair in combination with an ease of reconditioning the machine, are achieved by providing intermediate rings (18) in the inner wall of the housing (11) between neighbouring rows of vanes (13) such that the outer wall of the flow channel (14) is essentially formed by said vanes (13) and intermediate rings (18).

## Description

### BACKGROUND OF THE INVENTION

The present invention relates to the technology of gas turbines. It refers to a compressor according to the preamble of claim 1. It further refers to a method for repairing and/or changing the geometry of and/or servicing such a compressor.

### PRIOR ART

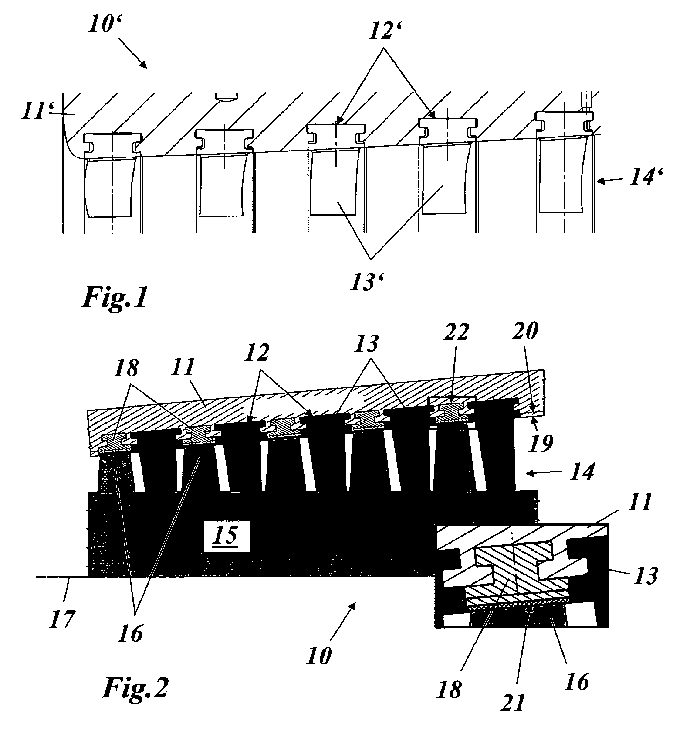

According to the prior art the static part of a gas turbine (GT) compressor consists of a housing (and perhaps vane carriers) and compressor vanes. The flow channel of the compressor is build up directly from the housing (and perhaps vane carriers) and the rotor. The static part of an exemplary prior art compressor is shown in Fig. 1.

The compressor 10' of Fig. 1 comprises a housing 11', which coaxially surround s a rotor (not shown). The ring-like intermediate space between the housing 11' and the rotor is a flow channel 14', through which the fluid (e.g. air) to be compressed flows. The housing 11' is equipped with a plurality of (static) vanes 13', which are arranged in rows in a spaced relationship. In between two neighbouring rows of vanes 13' a row of (rotating) blades (not shown) is provided, which are mounted on the rotor. As can be easily seen in Fig. 1, the geometry of the flow channel 14' is determined on one hand by the platforms of the vanes 13' (in the area of the rows of vanes 13'), and on the other hand by the inner wall of the housing (in the area between neighbouring rows of vanes 13'.

For a compressor of the kind shown in Fig. 1 the followings points lead to outage times, which are longer than needed:
● Repairing of appearing rubbing marks of the running blades at the inner wall of the housing 11' is hardly possible or difficult to achieve;
● For a potential compressor upgrade (larger annulus, etc.) the whole compressor housing 11' needs to be reworked or replaced.

Furthermore, tolerances between the housing and the compressor blades cannot be decreased, because a possible rubbing of the blades at the wall is not optimal and could lead to a blade damage, etc. Thus, the leakage is larger than necessary and the efficiency of the GT does not reach the maximum possible value.

### SUMMARY OF THE INVENTION

It is an object of the present invention to provide a compressor for a gas turbine, which is free of the aforementioned drawbacks of the prior art and combines a fast exchangeability and/or repair with an ease of reconditioning the machine.

It is a further object of the invention to provide a method for repairing and/or changing the geometry of and/or servicing such a compressor.

These and other objects are obtained by a compressor according to claim 1 and a method according to claim 100.

The compressor according to the invention comprises a rotor rotating about an axis and a housing coaxially surrounding said rotor, thereby defining a flow channel between rotor and housing for a fluid to be compressed, whereby alternating rows of vanes and blades are arranged within the flow channel, the vanes being mounted in the inner wall of the housing, and the blades being mounted in the outer wall of the rotor

It is characterized in that intermediate rings are provided in the inner wall of the housing between neighbouring rows of vanes such that the outer wall of the flow channel is essentially formed by said vanes and intermediate rings.

According to an embodiment of the invention said intermediate rings are adjacent to the tips of the blades.

Specifically, said intermediate rings bear a coating on their inner side just opposite to the tips of the blades.

More specifically, said coating is an abradable coating.

Even more specifically, the inner side of the intermediate rings is completely covered by said abradable coating.

According to another embodiment of the invention the inner side of the intermediate rings is only covered by said abradable coating only in an area opposite to the tips of the respective blades.

According to another embodiment of the invention is said abradable coating comprises a honeycomb structure filled with an abradable material.

According to another embodiment of the invention the intermediate rings are mounted in circumferential mounting grooves provided in the inner wall of the housing.

According to a further embodiment of the invention the intermediate rings are segmented in circumferential direction.

The method according to the invention is characterized in that the intermediate rings are exchanged and/or removed from the compressor, processed and put back into the compressor.

According to an embodiment of the inventive method the outer diameter of the flow channel is increased in an upgrade by exchanging the intermediate rings and vanes.

### BRIEF DESCRIPTION OF THE DRAWINGS

The present invention is now to be explained more closely by means of different embodiments and with reference to the attached drawings.
- Fig. 1: shows a part of compressor of a gas turbine according to the prior art;
- Fig. 2: shows a part of the compressor of the gas turbine according to an embodiment of the invention, whereby a detail showing an intermediate ring is magnified; and
- Fig. 3: shows three different embodiments of an intermediate ring having an abradable coating.

### DETAILED DESCRIPTION OF DIFFERENT EMBODIMENTS OF THE INVENTION

The central idea of the present invention is to define a flow channel of the gas turbine compressor by means of compressor blades and intermediate rings arranged between successive rows of blades. By this flexibility with respect to channel geometry, range of materials to be used and serviceability are increased.

Fig. 2 shows an embodiment of the invention. The compressor 10 of Fig. 2 comprises a rotor 15 rotating around the machine axis 17. The housing 11 coaxially surrounds the rotor 15 thereby defining a ring-like flow channel 14 between rotor 15 and housing 11. The blading of the compressor 10 comprises alternating arrangements of rows of rotating blades 16 and static vanes 13. The vanes 13 are received by circumferential mounting grooves 12 being provided in the inner wall of the housing 11. The blades 16 are mounted on the rotor 15. Opposite to the tips of the blades 16 intermediate rings 18 are received by respective mounting grooves 22 such that the flow channel 14 is completely defined at its outer side by means of the vanes 13 and intermediate rings 18.

As a result of this configuration, the annulus of the compressor can be increased at a later time by simply exchanging the vanes 13 and the intermediate rings 18. A respective upgrade contour 20, which differs substantially from a former contour 19, is shown in Fig. 2. Instead of exchanging and the intermediate rings 18, they can be reworked to have a larger in diameter.

That disassembling and/or exchanging of the intermediate rings is alleviated by dividing each intermediate ring into a plurality of segments. The number of segments depends on the situation.

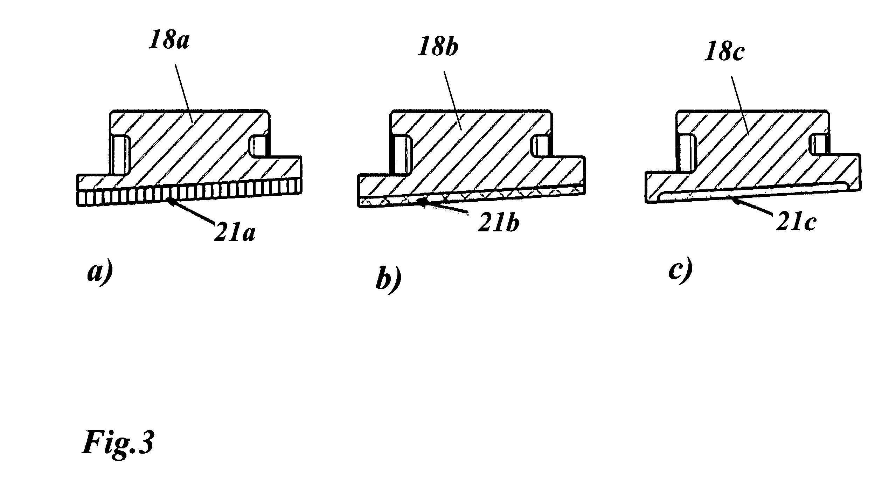

Fig. 3 shows three different options (a), (b) and (c) for a coating of the intermediate ring segments. These coatings allow for example a decrease of the leakage within the compressor 10 so that the efficiency of the gas turbine is increased. The coating 21 a of the intermediate ring 18a in Fig. 3(a) comprises a honeycomb structure filled with an abradable material. The coating 21 b of the intermediate ring 18b in Fig. 3(b) is an abradable coating covering the inner wall of the intermediate ring segment completely. The coating 21c of the intermediate ring 18c in Fig. 3(c) is an abradable coating covering only that part of the inner wall of the intermediate ring segment, which is actually opposite to the tip of the rotating blades.

To repair the compressor at its flow channel 14 or to upgrade it by changing its geometry, the intermediate rings 18 (and perhaps the vanes 13) can be removed from the compressor and reworked accordingly or replaced by different rings (of vanes).

### The advantages of the new compressor design are:

● Fast assembly resp. exchangeability;
● Different geometries (larger annulus, etc.) are easy to realize;
● A reconditioning of the contact surfaces is easily possible;
● If necessary, oval grinding is possible (or adaptable) just for the intermediate rings instead of the whole housing (to compensate for the deformation during assembly of the housing parts);
● Abradable coatings or other options possible for the inner surface of the insert rings are easily realized;
● A potential compressor upgrade for higher massflow "just" requires new vanes and intermediate rings. There is no need for new or reworked housings;
● Better thermal behaviour of compressor housing due to less contact surface;
● Allows alternative material combinations (e.g. different thermal expansion or friction coefficients);
● Exchangeability of rings with rotor being in place
● In case of a potential compressor damage the correction can be done very fast, because parts "just" need to be replaced instead of being reworked, etc;
● High flexibility.

### LIST OF REFERENCE NUMERALS

- 10,10': compressor
- 11,11': housing
- 12,12': mounting groove (vane)
- 13,13': vane
- 14,14': flow channel
- 15: rotor
- 16: blade
- 17: axis
- 18,18a-c: intermediate ring
- 19: first upgrade contour
- 20: second upgrade contour
- 21,21a-c: coating
- 22: mounting groove (intermediate ring)

## Claims

1. Compressor (10), especially for a gas turbine, said compressor comprising a rotor (15) rotating about an axis (17) and a housing (11) coaxially surrounding said rotor (15), thereby defining a flow channel (14) between rotor (15) and housing (11) for a fluid to be compressed, whereby alternating rows of vanes (13) and blades (16) are arranged within the flow channel (14), the vanes (13) being mounted in the inner wall of the housing (11), and the blades (16) being mounted in the outer wall of the rotor (15), **characterized in that** intermediate rings (18, 18a-c) are provided in the inner wall of the housing (11) between neighbouring rows of vanes (13) such that the outer wall of the flow channel (14) is essentially formed by said vanes (13) and intermediate rings (18, 18a-c).

2. Compressor as claimed in claim 1, **characterized in that** said intermediate rings (18, 18a-c) are adjacent to the tips of the blades (16).

3. Compressor as claimed in claim 2, **characterized in that** said intermediate rings (18, 18a-c) bear a coating (21, 21a-c) on their inner side just opposite to the tips of the blades (19).

4. Compressor as claimed in claim 3, **characterized in that** said coating (21, 21a-c) is an abradable coating.

5. Compressor as claimed in claim 4, **characterized in that** the inner side of the intermediate rings (18, 18a,b) is completely covered by said abradable coating (21, 21 a,b).

6. Compressor as claimed in claim 4, **characterized in that** the inner side of the intermediate rings (18, 18a,b) is only covered by said abradable coating (21c) only in an area opposite to the tips of the respective blades (16).

7. Compressor as claimed in claim 4, **characterized in that** said abradable coating (21 a) comprises a honeycomb structure filled with an abradable material.

8. Compressor as claimed in one of the claims 1-7, **characterized in that** the intermediate rings (18, 18a-c) are mounted in circumferential mounting grooves (22) provided in the inner wall of the housing (11).

9. Compressor as claimed in one of the claims 1-8, **characterized in that** the intermediate rings (18, 18a-c) are segmented in circumferential direction.

10. Method for repairing and/or changing the geometry of and/or servicing the compressor (10) according to one of the claims 1-9, **characterized in that** the intermediate rings (18, 18a-c) are exchanged and/or removed from the compressor (10), processed and put back into the compressor (10).

11. Method according to claim 10, **characterized in that** the outer diameter of the flow channel (14) is increased (20) in an upgrade by exchanging the intermediate rings (18, 18a-c) and vanes (13).
